(19) Europäisches Patentamt
European Patent Office
Office européen des brevets

(11) **EP 1 925 385 A1**

(12) **EUROPEAN PATENT APPLICATION**

(43) Date of publication:
**28.05.2008 Bulletin 2008/22**

(51) Int Cl.:
**B23B 41/04** *(2006.01)*

(21) Application number: **06024099.1**

(22) Date of filing: **21.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Da Costa Barros, Antonio César Sao Pulo (ES)**

(72) Inventor: **Da Costa Barros, Antonio César Sao Pulo (ES)**

(74) Representative: **Temino Ceniceros, Ignacio Abril Abogados Calle Amador de los Rios, 1 - 1° 28010 Madrid (ES)**

(54) **Drill for hole opening of square geometrical arrangement**

(57) "DRILL FOR HOLE OPENING OF SQUARE GEOMETRICAL ARRANGEMENT", characterized by a main body made from a fixing cylindrical bracket which projects on its front end a balancing collar of larger diameter whose frontal section, centrally projects, longitudinally a drill provided with a flat area in its lower part from where several cutting fillets are departed, positioned in a straight way, converging to the drill's end being such drill provided with output channels in its cutting area, which describe cutting edges being that the drill describes traverse an "S" shape.

FIG. 1

EP 1 925 385 A1

**Description**

The present invention patent application refers to a "DRILL FOR HOLE OPENING OF SQUARE GEOMETRICAL ARRANGEMENT" developed from a spiral end with a number of cutting fillets longitudinally arranged on an axle positioned halfway, enabling the opening of square holes or lowering in any type of material in an accurate, quick and safe way.

Currently, the making of a hole, be it blind or passant of square shape is only performed through thread electro-erosion, filing plain, and the cutting processes by water jet and laser. The holes and square lowering made by electro-erosion are carried out in modem electro-erosion machines which present the following basic configuration:

- the control panel and power generator is the "brain" of the machine. All milling parameters are determined in it.
- the head is the place where the electrode is fixed or, eventually, the part. It is fixed to the machine column and has vertical movement.
- the milling tank is the container where the part and the electrode remain immerse during the electro-erosion process.
- the milling table is the place where the part is supported. It allows for making two types of advance: longitudinal and traverse.
- the dielectrical reservoir and the filtering system is the container where the insulating fluid is stored and where the cleaning of the residues generated in the process is performed. The next step is related to the square hole milling. The electrode used can be of electrolytic copper, a suitable material for steel electro-erosion. The electrode's nominal measures (mn) are the same as the cavity to be produced. But an electrode with the same dimensions as the cavity would produce a pruning bigger than desired. Therefore, it's necessary to calculate the electrode's final measures (mf mf), taking into account:

- the spark length (GAP);
- the desired (r) on the part's surface in mm;
- the safety coefficient (cs).

The safety coefficient is about 10% of the part's dimensional tolerance value. Depending on the work to be carried out, two types of electrode may be necessary: the pruning electrode and the finishing electrode.

The formula for the pruning electrode's final measure calculation is: mf = mn - (2 GAP + 2r + cs).

After that phase, we should carry out a washing, that is, the dielectrical circulation between the electrode and the milled part, since, during the milling, the eroded particles tend to be accumulated at points of the electrode's and the part's surface. The accumulation of big amounts of particles leads to the lessening of electrical resistance, facilitating the formation of abnormal discharges which damage the part and the electrode.

After the cleaning system is enabled, the machine must be switched on through the control panel's control button at the centering position. In order to avoid electrical chock, the electrode should be approximated to the part until a sparking is observed.

The adjustment of the desired depth is performed on the depth limiting device. When the machine is provided with digital reading system, this vertical measure (z), as well as the longitudinal (x) and the traverse measures (y) are obtained with extreme accuracy.

This operation is intended to adjust the erosion depth, indispensable to obtain the desired depth, in both, pruning operation as well as in the finishing operation. When the electrode reaches the established depth, the machine is automatically switched off and the electrode returns to the original position. It's necessary to adjust the depth, even if dealing with passing cavity milling in order to avoid damages to the table or to the devices used.

It's realized that this operation depends on high cost complex machinery, where the square holes are easily made after a full preparation of the equipment. That makes the work slow and laborious, being feasible only when carried out in large scale.

It's object of the present invention patent application to provide a device and a drill to make square holes. Thus, after a long period of test and studies, the inventor developed a "DRILL FOR HOLE OPENING OF SQUARE GEOMETRICAL ARRANGEMENT", comprised of a main body, made from a cylindrical fixing bracket which projects on its front end a balancing collar of a bigger diameter whose frontal section, centrally projects, longitudinally a drill provided with a flat area from where several cutting fillets are departed positioned in a straight way, converging to the drill end being such drill, provided with output channels on its cutting area which describe cutting edges being that the drill describes traverse a "S" shape.

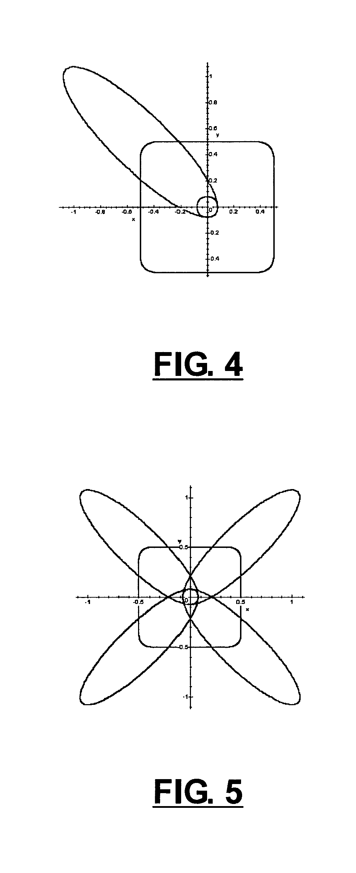

The drill path is composed of four ellipse arches, as shown in figures 4 and 5. Since this path is not a circumference, its radius is variable, which should follow the equations:

$$radius = \begin{cases} \sqrt{\left(\frac{1}{2}\cos\theta + \frac{1}{2\sqrt{3}}\sin\theta - \frac{1}{2}\right)^2 + \left(\frac{1}{2} - \frac{1}{\sqrt{3}}\cos\theta\right)^2}\ a & , \quad if \quad 0 \le \theta \le \frac{\pi}{6} \\[2em] \sqrt{\left(\frac{1}{2}\cos\theta + \frac{1}{2\sqrt{3}}\sin\theta - \frac{1}{2}\right)^2 + \left(\frac{1}{2}\sin\theta + \frac{1}{2\sqrt{3}}\cos\theta - \frac{1}{2}\right)^2}\ a & , \quad if \quad \frac{\pi}{6} \le \theta \le \frac{\pi}{3} \\[2em] \sqrt{\left(\frac{1}{2} - \frac{1}{\sqrt{3}}\sin\theta\right)^2 + \left(\frac{1}{2}\sin\theta + \frac{1}{2\sqrt{3}}\cos\theta - \frac{1}{2}\right)^2}\ a & , \quad if \quad \frac{\pi}{3} \le \theta \le \frac{\pi}{2} \\[2em] \sqrt{\left(\frac{1}{2} - \frac{1}{\sqrt{3}}\sin\theta\right)^2 + \left(\frac{1}{2} - \frac{1}{2}\sin\theta + \frac{1}{2\sqrt{3}}\cos\theta\right)^2}\ a & , \quad if \quad \frac{\pi}{2} \le \theta \le \frac{2\pi}{3}, \end{cases}$$

where $\square$ is the drill's angle rotation and *a* is the length on the square to be perforated.

In addition to that, there must be the following relation between the translation angle $\square$ and rotation angle $\square$:

$$\alpha = \begin{cases} arccos\left(\frac{\left(\frac{1}{\sqrt{3}}\cos\theta - \frac{1}{2}\right)a}{radius}\right) & , \quad if \quad 0 \le \theta \le \frac{\pi}{6} \\[2em] arccos\left(\frac{\left(\frac{1}{2} - \frac{1}{2}\sin\theta - \frac{1}{2\sqrt{3}}\cos\theta\right)a}{radius}\right) & , \quad if \quad \frac{\pi}{6} \le \theta \le \frac{\pi}{3} \\[2em] 2\pi - arccos\left(\frac{\left(\frac{1}{2} - \frac{1}{2}\sin\theta - \frac{1}{2\sqrt{3}}\cos\theta\right)a}{radius}\right) & , \quad if \quad \frac{\pi}{3} \le \theta \le \frac{\pi}{2} \\[2em] 2\pi - arccos\left(\frac{\left(\frac{1}{2}\sin\theta - \frac{1}{2\sqrt{3}}\cos\theta - \frac{1}{2}\right)a}{radius}\right) & , \quad if \quad \frac{\pi}{2} \le \theta \le \frac{2\pi}{3} \end{cases}$$

In order to obtain a perfect understanding of what has been developed, illustrating drawings are enclosed which are numeral references, together with a detailed description of the following items, where:

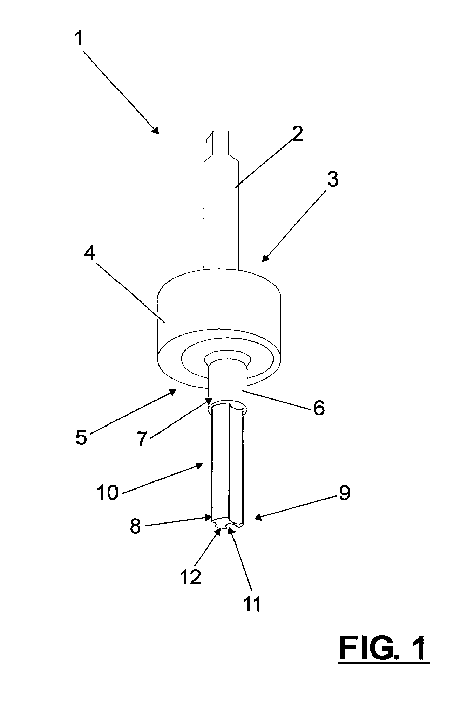

Figure 1 shows a view of the set.

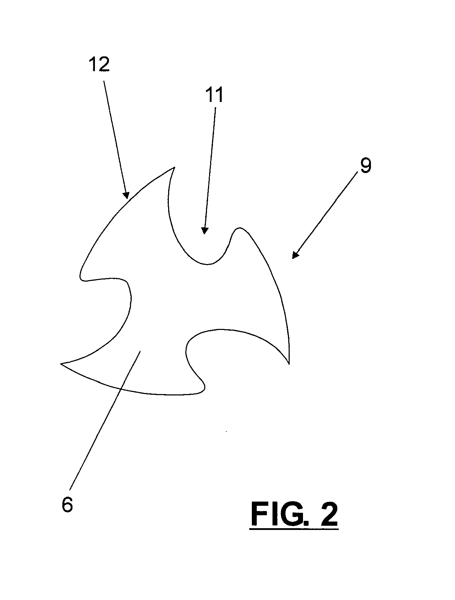

Figure 2 shows an upper view of the set.

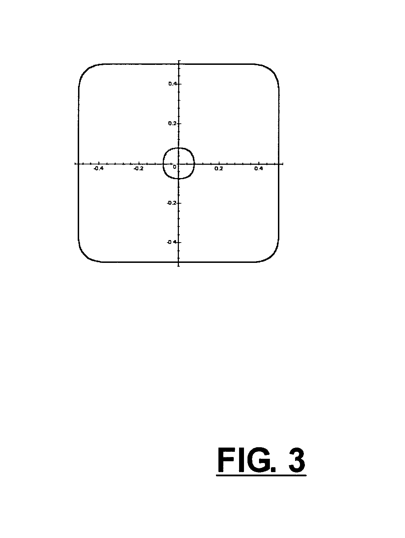

Figure 3 shows a side view of the nozzle.
Figure 4 shows a side view of the lid.
Figure 5 shows a view of "Y" detail.

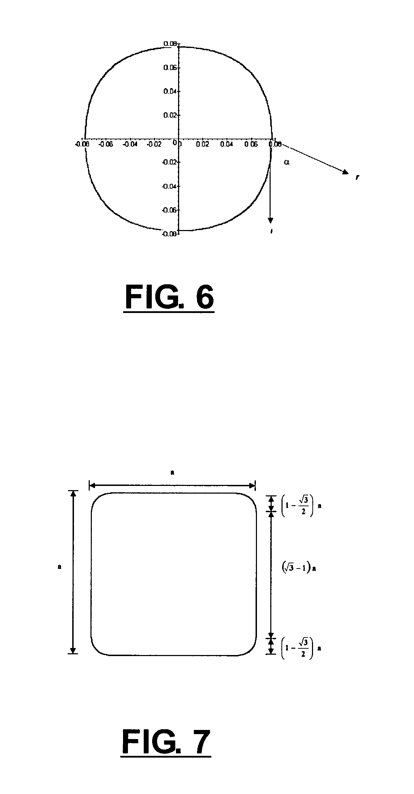

Figure 6 shows a view of "X" detail.

As it can be seen from the drawings and their details, we can verify that the "DRILL FOR HOLE OPENING OF SQUARE GEOMETRICAL ARRANGEMENT", comprised of a main body (1), made from a fixing cylindrical bracket (2) which projects its front end (3) a balancing collar (4) of bigger diameter whose frontal section (5), projects centrally, longitudinally, a drill (6) provided with a flat area in its lower part (7) from where several cutting fillets are departed (8) positioned in a straight way, converging to the drill end (11), being such drill (6) provided with output channels (13) in its cutting area (12) which describe cutting edges (14) which traverse describe the "S" format.

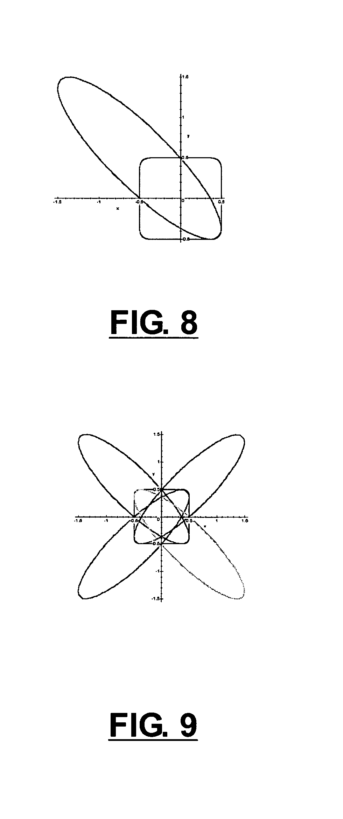

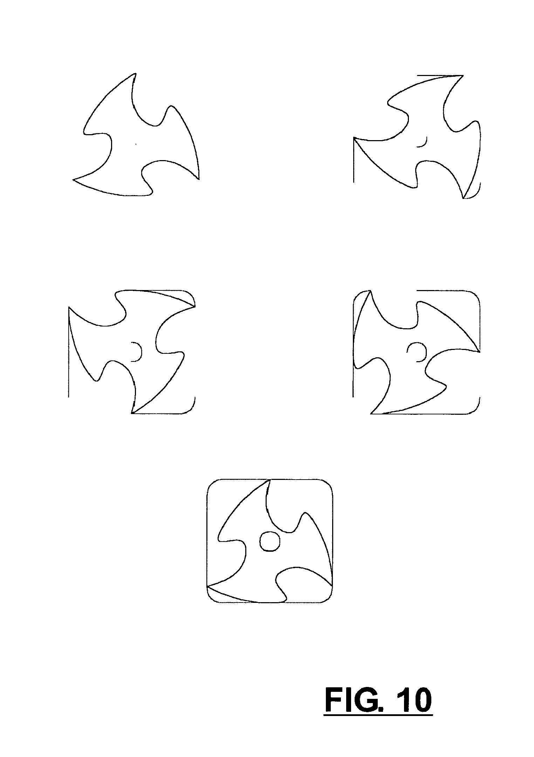

Owing to the above described and illustrated it's realized that the "DRILL FOR HOLE OPENING OF SQUARE GEOMETRICAL ARRANGEMENT" offers great advantage, since it allows for the making of holes and lowering in square geometrical shape through a turning drill. The holes are produced with rounded corners which are ellipse arches, as shown in figures 8 and 9.

It's realized that this operation fully eliminates the use of high cost complex machinery, where the square holes are made after a full preparation of the equipment. That makes the work slow and laborious, being only feasible when carried out in large scale. Since it's innovating and so far not understood in the existing ones, it's perfectly fitted within the criteria which define the invention patent. Its claims are the following.

**Claims**

1. "DRILL FOR HOLE OPENING OF SQUARE GEOMETRICAL ARRANGEMENT", **characterized by** a main body (1), made from a fixing cylindrical bracket (2) which projects on its front end (3) a balancing collar (4) of larger diameter whose frontal section (5), centrally projects, longitudinally a drill (6) provided with a flat area in its lower part (7) from where several cutting fillets are departed (8) positioned in a straight way, converging to the drill's end (11), being such drill (6), provided with output channels (13) in its cutting area (12), which describe cutting edges (14) being the drill (2) describes traverse an "S" shape.

2. "DRILL FOR HOLE OPENING OF SQUARE GEOMETRICAL ARRANGEMENT", according to claim 1, **characterized by** comprising a path which is not a circumference, where its radius is feasible and should follow the equations, where $\square$ is the drill's rotation angle and $a$ is the length of the side square to be perforated:

$$radius = \begin{cases} \sqrt{\left(\frac{1}{2}\cos\theta + \frac{1}{2\sqrt{3}}\sin\theta - \frac{1}{2}\right)^2 + \left(\frac{1}{2} - \frac{1}{\sqrt{3}}\cos\theta\right)^2}\; a & , \quad if \quad 0 \leq \theta \leq \frac{\pi}{6} \\[2em] \sqrt{\left(\frac{1}{2}\cos\theta + \frac{1}{2\sqrt{3}}\sin\theta - \frac{1}{2}\right)^2 + \left(\frac{1}{2}\sin\theta + \frac{1}{2\sqrt{3}}\cos\theta - \frac{1}{2}\right)^2}\; a & , \quad if \quad \frac{\pi}{6} \leq \theta \leq \frac{\pi}{3} \\[2em] \sqrt{\left(\frac{1}{2} - \frac{1}{\sqrt{3}}\sin\theta\right)^2 + \left(\frac{1}{2}\sin\theta + \frac{1}{2\sqrt{3}}\cos\theta - \frac{1}{2}\right)^2}\; a & , \quad if \quad \frac{\pi}{3} \leq \theta \leq \frac{\pi}{2} \\[2em] \sqrt{\left(\frac{1}{2} - \frac{1}{\sqrt{3}}\sin\theta\right)^2 + \left(\frac{1}{2} - \frac{1}{2}\sin\theta + \frac{1}{2\sqrt{3}}\cos\theta\right)^2}\; a & , \quad if \quad \frac{\pi}{2} \leq \theta \leq \frac{2\pi}{3}, \end{cases}$$

3. "DRILL FOR HOLE OPENING OF SQUARE GEOMETRICAL ARRANGEMENT", according to claim 1 and 2 above, **characterized by** comprising the following relation between the translation angle $\square$ and the rotation angle $\square$:

$$
\alpha = \begin{cases}
\arccos\left(\dfrac{\left(\dfrac{1}{\sqrt{3}}\cos\theta - \dfrac{1}{2}\right)a}{radius}\right) & , \quad if \quad 0 \le \theta \le \dfrac{\pi}{6} \\[4em]
\arccos\left(\dfrac{\left(\dfrac{1}{2} - \dfrac{1}{2}\sin\theta - \dfrac{1}{2\sqrt{3}}\cos\theta\right)a}{radius}\right) & , \quad if \quad \dfrac{\pi}{6} \le \theta \le \dfrac{\pi}{3} \\[4em]
2\pi - \arccos\left(\dfrac{\left(\dfrac{1}{2} - \dfrac{1}{2}\sin\theta - \dfrac{1}{2\sqrt{3}}\cos\theta\right)a}{radius}\right) & , \quad if \quad \dfrac{\pi}{3} \le \theta \le \dfrac{\pi}{2} \\[4em]
2\pi - \arccos\left(\dfrac{\left(\dfrac{1}{2}\sin\theta - \dfrac{1}{2\sqrt{3}}\cos\theta - \dfrac{1}{2}\right)a}{radius}\right) & , \quad if \quad \dfrac{\pi}{2} \le \theta \le \dfrac{2\pi}{3}
\end{cases}
$$

**FIG. 1**

12

11

9

6

**FIG. 2**

**FIG. 3**

## FIG. 4

## FIG. 5

**FIG. 6**

**FIG. 7**

**FIG. 8**

**FIG. 9**

**FIG. 10**

European Patent
Office

**PARTIAL EUROPEAN SEARCH REPORT**

which under Rule 45 of the European Patent Convention
shall be considered, for the purposes of subsequent
proceedings, as the European search report

Application Number

EP 06 02 4099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 529 157 A (HIGERD ROBERT J) 7 November 1950 (1950-11-07) | 1 | INV. B23B41/04 |
| Y | * figures 1-5 * | 2,3 | |
| | ----- | | |
| X | GB 102 874 A (HARRIS RICHARD HENRY [GB]) 4 January 1917 (1917-01-04) | 1 | |
| Y | * figures 1,2,8-13 * | 2,3 | |
| | ----- | | |
| X | DE 540 943 C (PAUL HARRASER) 31 December 1931 (1931-12-31) * figures 1-3 * | 1 | |
| | ----- | | |
| X | US 6 601 484 B1 (KATOH KOUICHI [JP] ET AL) 5 August 2003 (2003-08-05) | 1 | |
| Y | * figures 1,2,6,9 * | 2,3 | |
| | ----- | | |
| Y | US 2002/071732 A1 (FUNAKI TAKAHIRO [JP] ET AL) 13 June 2002 (2002-06-13) * figures 4-9,12 * | 2,3 | |
| | ----- | | |

TECHNICAL FIELDS
SEARCHED (IPC)

B23B

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 3 May 2007 | Kornmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                     

& : member of the same patent family, corresponding document

EPO FORM 1503 03.82 (P04C07)

**INCOMPLETE SEARCH
SHEET C**

Claim(s) searched completely:
        1

Claim(s) searched incompletely:
        2,3

Claim(s) not searched:
            -

Reason for the limitation of the search:

Present claims 2 and 3 relate to a product, i.e. a drill, defined by formulas where the symbols used in the text are not consistent with the symbols used in the formulas. Furthermore, it appears that not the shape of the drill is intended to be defined but rather a path which is to be followed by the drill when a square hole is machined according to a method for drilling non-circular holes. Moreover, the incomplete and obviously incorrect description of the figures does not permit a clear determination of the claimed subject-matter either.
As a result of these deficiencies the application does not comply with the requirement of clarity under Article 84 and 83 EPC.

The lack of clarity, support and disclosure is to such an extent, that a meaningful search of the whole claimed subject-matter of claims 2 and 3 could not be carried out (Rule 45 EPC). The extent of the search was consequently limited to a method for drilling non-circular holes using a drill as defined by claim 1.

**ANNEX TO THE EUROPEAN SEARCH REPORT
ON EUROPEAN PATENT APPLICATION NO.**

EP 06 02 4099

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2007

| Patent document cited in search report | | Publication date | Patent family member(s) | | Publication date |
|---|---|---|---|---|---|
| US 2529157 | A | 07-11-1950 | NONE | | |
| GB 102874 | A | 04-01-1917 | NONE | | |
| DE 540943 | C | 31-12-1931 | NONE | | |
| US 6601484 | B1 | 05-08-2003 | JP | 3884884 B2 | 21-02-2007 |
| | | | JP | 2001009603 A | 16-01-2001 |
| | | | KR | 20010021012 A | 15-03-2001 |
| | | | TW | 460366 B | 21-10-2001 |
| US 2002071732 | A1 | 13-06-2002 | JP | 2002182716 A | 26-06-2002 |